# EUROPEAN PATENT APPLICATION

(11) **EP 4 474 891 A1**
(43) Date of publication of application: **11.12.2024**
(21) Application number: 22924058.5
(22) Date of filing: 17.11.2022
(51) Int. Cl.: G02F 1/09, G02B 6/02, G02B 6/26

(54) **OPTICAL TRANSMISSION PATH AND OPTICAL CONNECTOR**

(30) Priority: 31.01.2022 JP 2022013190
(71) Applicant: Fujikura Ltd., Tokyo 135-8512 (JP)
(72) Inventor: KUNAI, Yuichiro, Tokyo 135-8512 (JP); KUSAKA, Hiroyuki, Tokyo 135-8512 (JP); KASHIWAGI, Masahiro, Tokyo 135-8512 (JP)
(74) Representative: Plasseraud IP
(86) International application number: PCT/JP2022/042726
(87) International publication number: WO 2023/145206

(57) **Abstract**

Achieved is an optical transmission path that enables compensating for a change in the two-dimensional intensity distribution of signal light which occurs in an optical waveguide. An optical transmission path (1) includes an optical waveguide (11) and an optical modulation element (121). Phase-modulation amounts of the cells of the optical modulation element (121) are set so as to compensate for a change in the two-dimensional intensity distribution of signal light which occurs in the optical waveguide (11).

## Description

### Technical Field

The present invention relates to an optical transmission path including an optical waveguide. In addition, the present invention relates to an optical connector for connecting an optical processor and an optical waveguide.

### Background Art

Research and development on optical processors that optically perform computing are underway in order to surpass limits of electrical processors, such as a central processing unit (CPU) and a graphics processing unit (GPU), which electrically perform computing. Using such optical processors enables computing to be performed at higher speed than electrical processors. Examples of technologies contributing to achieving such optical processors include an optical transistor disclosed in Non-Patent Literature 1. Citation List

### [Non-patent Literature]

[Non-patent Literature 1]
Nozaki, K., Matsuo, S., Fujii, T. et al. Femtofarad optoelectronic integration demonstrating energy-saving signal conversion and nonlinear functions. Nat. Photonics 13, 454-459 (2019). https://doi.org/10.1038/s41566-019-0397-3

### Summary of Invention

### Technical Problem

However, in a system including a plurality of optical processors, when these optical processors are connected via electrical transmission paths, a process of converting an optical signal into an electrical signal results in a bottleneck, and thus a computing speed as an entire system is not sufficiently improved.

In particular, some optical processors output optical signals that express two-dimensional data, such as images, through two-dimensional intensity distributions. In a case where such an optical processor is connected via an electrical transmission path, it is required to (1) read two-dimensional data of m rows × n columns indicated by an optical signal, (2) generate m pieces of one-dimensional data corresponding to the rows of the two-dimensional data thus read, (3) generate m electrical signals indicating the respective m pieces of one-dimensional data thus generated, and (4) sequentially transmit the m electrical signals thus generated. Thus, no matter how fast the computing optically performed by the optical processors is, the high speed cannot be utilized. Therefore, such an optical processor is connected preferably via an optical transmission path, not via an electrical transmission path.

Note, however, that in a case where an optical waveguide is used as the optical transmission path, an optical signal outputted from an optical processor cannot be transmitted with the two-dimensional intensity distribution thereof maintained. This is because the two-dimensional intensity distribution of an optical signal changes during a process of guiding the optical signal in an optical waveguide.

An aspect of the present invention is achieved in light of the foregoing problem, and it is an object of the aspect to achieve an optical transmission path that enables compensating for a change in two-dimensional intensity distribution of signal light which occurs in an optical waveguide.

### Solution to Problem

In an optical transmission path in accordance with an aspect of the present invention, a configuration is employed of including: an optical waveguide; and an optical modulation element that has a plurality of cells having respective phase-modulation amounts set independently of each other and that has one main surface provided so as to face one end surface of the optical waveguide, wherein the respective phase-modulation amounts of the plurality of cells which constitute the optical modulation element are set so as to compensate for a change in two-dimensional intensity distribution of signal light, the change occurring in the optical waveguide.

In an optical transmission path in accordance with another aspect of the present invention, a configuration is employed of including: an optical waveguide; an optical modulation element that has a plurality of cells having respective phase-modulation amounts which are able to be set independently of each other and that has one main surface provided so as to face one end surface of the optical waveguide; and a control part configured to set the respective phase-modulation amounts of the plurality of cells which constitute the optical modulation element so as to compensate for a change in two-dimensional intensity distribution of signal light, the change occurring in the optical waveguide.

An optical connector in accordance with an aspect of the present invention is an optical connector for connecting an optical waveguide and an optical processor, and in the optical connector, a configuration is employed of including: an optical modulation element that has a plurality of cells having respective phase-modulation amounts set independently of each other and that has one main surface provided so as to face one end surface of the optical waveguide, wherein the respective phase-modulation amounts of the plurality of cells which constitute the optical modulation element are set so as to compensate for a change in two-dimensional intensity distribution of signal light, the change occurring in the optical waveguide.

An optical connector in accordance with another aspect of the present invention is an optical connector for connecting an optical waveguide and an optical processor, and in the optical connector, a configuration is employed of including an optical modulation element that has a plurality of cells having respective phase-modulation amounts which are able to be set independently of each other and that has one main surface provided so as to face one end surface of the optical waveguide; and a control part configured to set the respective phase-modulation amounts of the plurality of cells which constitute the optical modulation element so as to compensate for a change in two-dimensional intensity distribution of signal light, the change occurring in the optical waveguide.

### Advantageous Effects of Invention

According to an aspect of the present invention, it is possible to achieve an optical transmission path that enables compensating for a change in two-dimensional intensity distribution of signal light which occurs in an optical waveguide.

### Brief Description of Drawings

Fig. 1 is a perspective view illustrating a configuration of an optical transmission path in accordance with an embodiment of the present invention.
Fig. 2 is a view illustrating a function of an optical modulation element group in the optical transmission path shown in Fig. 1. (a) of Fig. 2 illustrates a specific example of a two-dimensional intensity distribution of signal light which enters an optical modulation element, and (b), (c), and (d) of Fig. 2 each illustrate a specific example of a cross-sectional structure of an optical waveguide.
(a) of Fig. 3 is a plan view illustrating a first specific example of an optical modulation element included in the optical transmission path shown in Fig. 1. (b) of Fig. 3 is an enlarged perspective view of a part of the optical modulation element.
(a) of Fig. 4 is a plan view illustrating a second specific example of an optical modulation element included in the optical transmission path shown in Fig. 1. (b) of Fig. 4 is a cross-sectional view of a cell included in the optical modulation element.

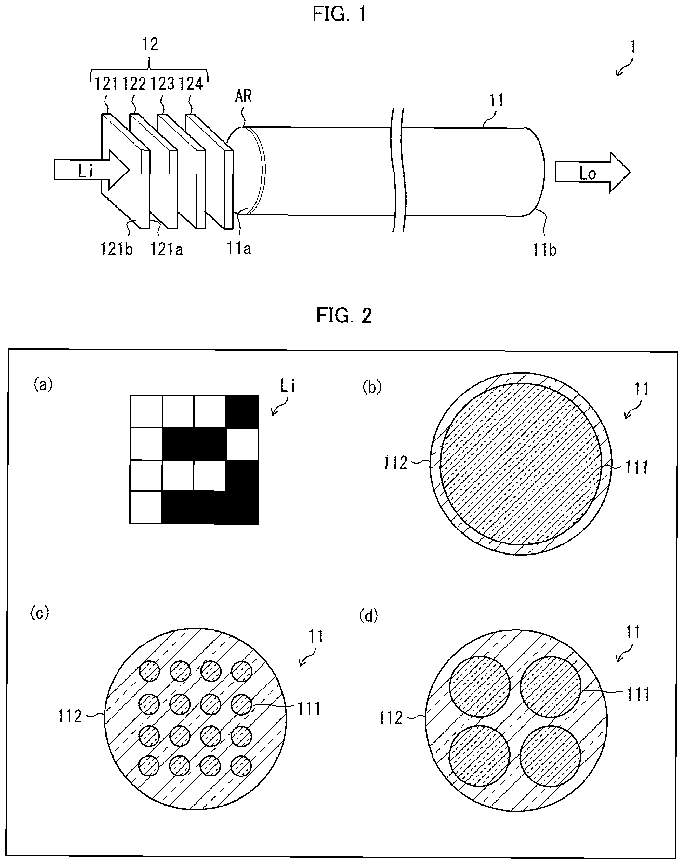

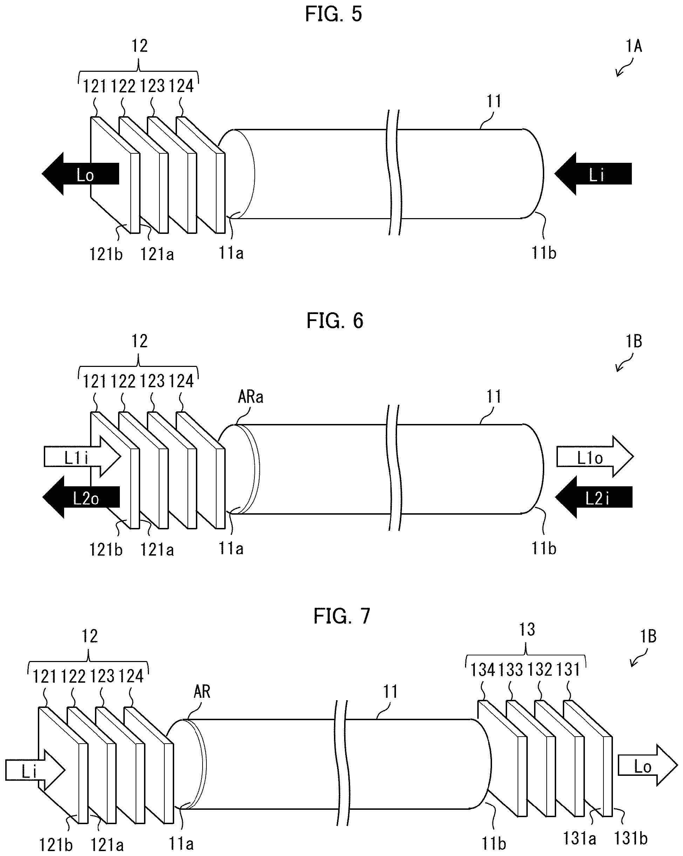

Fig. 5 is a perspective view illustrating a first variation of the optical transmission path shown in Fig. 1.
Fig. 6 is a perspective view illustrating a second variation of the optical transmission path shown in Fig. 1.
Fig. 7 is a perspective view illustrating a third variation of the optical transmission path shown in Fig. 1.

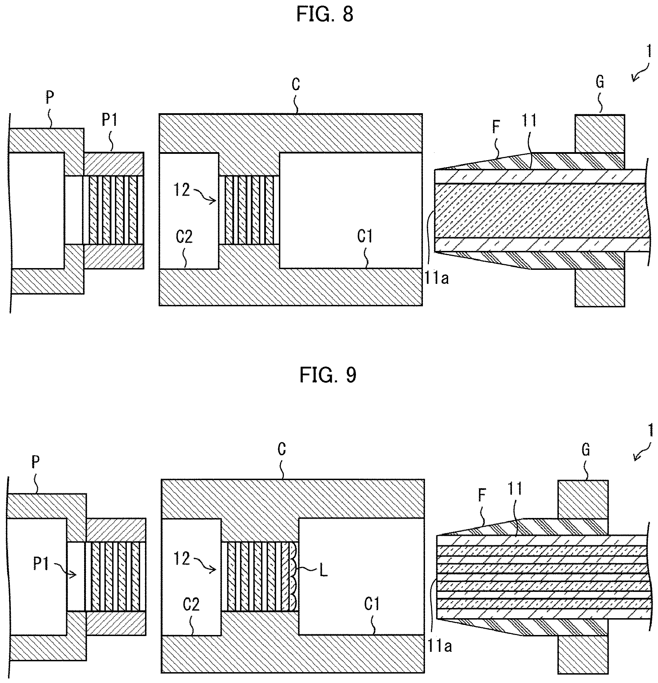

Fig. 8 is a cross-sectional view illustrating a first mounting example of the optical transmission path shown in Fig. 1.
Fig. 9 is a perspective view illustrating a second mounting example of the optical transmission path shown in Fig. 1.

### Description of Embodiments

### (Configuration of optical transmission path)

With reference to Fig. 1, the following description will discuss a configuration of an optical transmission path 1 in accordance with an embodiment of the present invention. Fig. 1 is a perspective view illustrating a configuration of the optical transmission path 1.

The optical transmission path 1 is a transmission path configured to transmit signal light. The optical transmission path 1 is used for, for example, connection between boards in which two optical processors mounted on different boards are connected or connection within a board in which two optical processors mounted on the same board are connected. As shown in Fig. 1, the optical transmission path 1 includes an optical waveguide 11 and an optical modulation element group 12.

The optical waveguide 11 is a unit configured to guide signal light. As the optical waveguide 11, for example, an optical fiber or a board-type optical waveguide (for example, silicon waveguide) can be used. In the present embodiment, as the optical waveguide 11, an optical fiber is used.

The optical modulation element group 12 is a unit configured to compensate for a change in two-dimensional intensity distribution of signal light which occurs during a process of guiding the signal light in the optical waveguide 11. The optical modulation element group 12 is constituted by at least one optical modulation element. In the present embodiment, as the optical modulation element group 12, an optical modulation element group constituted by four optical modulation elements 121 to 124 is used. As described later, each of the optical modulation elements 121 to 124 is constituted by a plurality of cells having respective phase-modulation amounts that can be set independently of each other.

The optical modulation element 121 is provided in a manner such that one main surface 121a thereof faces one end surface 11a of the optical waveguide 11. The optical modulation element 122 is provided between the optical modulation element 121 and the optical waveguide 11 as in the case of the optical modulation element 121. The optical modulation element 123 is provided between the optical modulation element 122 and the optical waveguide 11 as in the case of the optical modulation element 121. The optical modulation element 124 is provided between the optical modulation element 123 and the optical waveguide 11 as in the case of the optical modulation element 121. Therefore, signal light Li to be inputted from an optical processor into the optical transmission path 1 passes through the optical modulation element 121, the optical modulation element 122, the optical modulation element 123, and the optical modulation element 124 in this order and then is inputted from the end surface 11a into the optical waveguide 11.

The respective phase-modulation amounts of the cells of the optical modulation elements 121 to 124 are set so as to compensate for a change in two-dimensional intensity distribution of signal light which occurs during a process of guiding the signal light in the optical waveguide 11. In other words, the phase-modulation amounts are set such that a difference between the two-dimensional intensity distribution of the signal light Li which enters the other main surface 121b of the optical modulation element 121 and the two-dimensional intensity distribution of signal light Lo which is emitted from the other end surface 11b of the optical waveguide 11 becomes smaller than in a case where the optical modulation element group 12 is absent.

It is possible to achieve setting of the phase-modulation amounts of the cells of the optical modulation elements 121 to 124, for example, through machine learning. In this machine learning, it is possible to use, for example, a model in which a two-dimensional intensity distribution of the signal light Li which enters the main surface 121b of the optical modulation element 121 is an input and a two-dimensional intensity distribution of the signal light Lo which is emitted from the end surface 11b of the optical waveguide 11 is an output and which includes a phase-modulation amount of each of the cells of the optical modulation elements 121 to 124 as a parameter. It is possible to suitably set the phase-modulation amounts of the cells of the optical modulation elements 121 to 124 by repeating a process of updating the parameter of the model for various signal light (training data) so as to diminish a difference between the input and the output of the model.

On the end surface 11a of the optical waveguide 11, an antireflection film AR may be formed. This makes it possible to reduce a risk that signal light that has been emitted from the optical modulation element group 12 is reflected by the end surface 11a of the optical waveguide 11 and enters the optical modulation element group 12 again.

In a case where the phase-modulation amounts of the cells of the optical modulation elements 121 to 124 are variable, the optical transmission path 1 preferably includes a control part (not shown) configured to set the phase-modulation amounts of the cells of the optical modulation elements 121 to 124 as described above.

Although, in the present embodiment, all of the optical modulation elements 121 to 124 are used for the compensation described above, this should not be construed as a limitation. For example, it is possible that some of the optical modulation elements 121 to 124 are used for the compensation described above and the other optical modulation elements are used for another optical computing. In this case, an optical waveguide having an optical computing function is achieved.

The optical modulation elements 121 to 124 may be integrated together. For example, four light diffraction layers formed inside a structure that allows signal light to pass therethrough, such as a dried gel may be used as the optical modulation elements 121 to 124. In this case, it is preferable to use a gel that is subjected to dehydration shrinkage so that the gel shrinks while keeping a similar shape, e.g., a gel used in the Implosion Fabrication process. This makes it possible to, by drying a swollen gel in which four light diffraction layers are formed, easily manufacture the optical modulation element group 12 in which the optical modulation elements 121 to 124 are accurately arranged.

### (Function of optical modulation element group)

With reference to Fig. 2, the following description will discuss the function of the optical modulation element group 12 in the optical transmission path 1. (a) of Fig. 2 indicates a specific example of the two-dimensional intensity distribution of the signal light Li which enters the optical modulation element 121, and (b), (c), and (d) of Fig. 2 each indicate a specific example of a cross-sectional structure of the optical waveguide 11. Here, it is assumed that the two-dimensional intensity distribution of the signal light L1 has a cell structure of 4 × 4, as shown in (a) of Fig. 2.

In the specific example shown in (b) of Fig. 2, the optical waveguide 11 has one core 111 having a cross-sectional area substantially equal to a beam cross-sectional area of the signal light Li. In this case, the entire signal light Li is coupled to the core 111 of the optical waveguide 11. Therefore, the two-dimensional intensity distribution of the signal light Li changes mainly by the signal light Li being guided in the core 111. One example of causes of the change is the following situation: the beams of the signal light Li which have been emitted from the cells of the optical modulation element 124 and are propagating inside the core 111 while dispersing interfere with each other and are totally reflected on an interface between the core 111 and a clad 112, so that the two-dimensional intensity distribution becomes out of shape. The phase-modulation amounts of the cells of the optical modulation elements 121 to 124 are set so as to compensate for this change. Therefore, the two-dimensional intensity distribution of the signal light Lo which is outputted from the end surface 11b of the optical waveguide 11 becomes closer to the two-dimensional intensity distribution of the signal light Li which is inputted into the main surface 121b of the optical modulation element 121 than in a case where the optical modulation element group 12 is absent.

In the specific example shown in (c) of Fig. 2, the optical waveguide 11 has 16 cores 111 each having a cross-sectional area approximately one sixteenth the beam cross-sectional area of the signal light Li. In this case, the signal light Li for one cell is coupled to each of the cores 111 of the optical waveguide 11. Therefore, the two-dimensional intensity distribution of the signal light Li changes mainly due to crosstalk occurring between adjacent cores 111. The phase-modulation amounts of the cells of the optical modulation elements 121 to 124 are set so as to compensate for this change. Therefore, the two-dimensional intensity distribution of the signal light Lo which is outputted from the end surface 11b of the optical waveguide 11 becomes closer to the two-dimensional intensity distribution of the signal light Li which is inputted into the main surface 121b of the optical modulation element 121 than in a case where the optical modulation element group 12 is absent.

In the specific example shown in (d) of Fig. 2, the optical waveguide 11 has four cores 111 each having a cross-sectional area approximately one fourth the beam cross-sectional area of the signal light Li. In this case, the signal light Li for four cells is coupled to each of the cores 111 of the optical waveguide 11. Therefore, the two-dimensional intensity distribution of the signal light Li is subject mainly to a change caused by the signal light Li being guided in each of the cores 111 and a change caused by cross talk occurring between adjacent cores 111. The phase-modulation amounts of the cells of the optical modulation elements 121 to 124 are set so as to compensate for these changes. Therefore, the two-dimensional intensity distribution of the signal light Lo which is outputted from the end surface 11b of the optical waveguide 11 becomes closer to the two-dimensional intensity distribution of the signal light Li which is inputted into the main surface 121b of the optical modulation element 121 than in a case where the optical modulation element group 12 is absent.

### (Specific Example 1 of Optical Modulation Element)

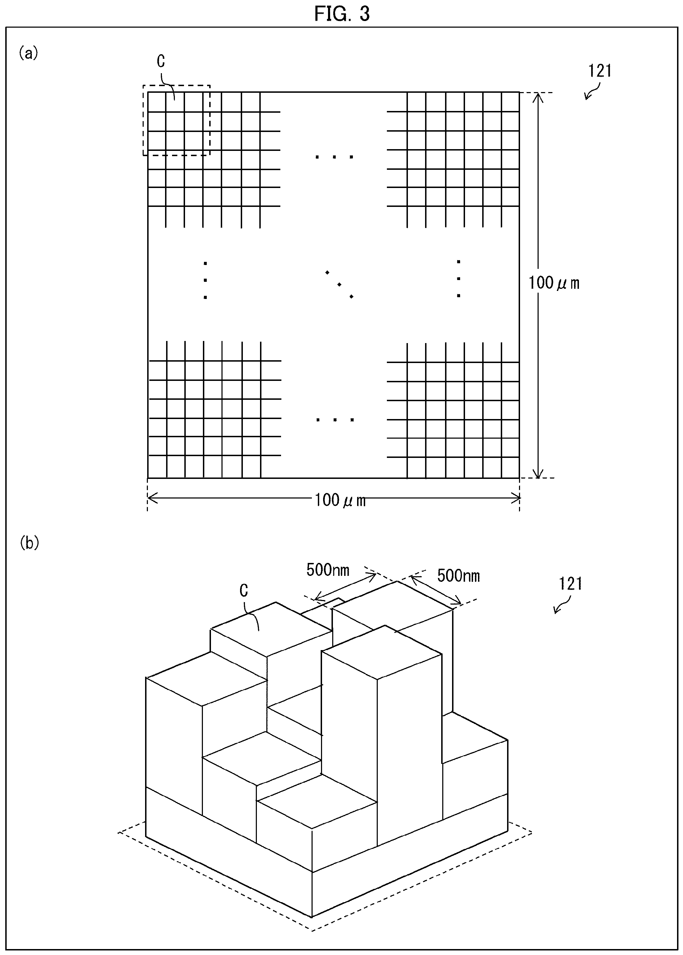

The following description will discuss, with reference to Fig. 3, a first specific example of the optical modulation elements 121 to 124. Here, the optical modulation element 121 is taken as an example, but the optical modulation elements 122 to 124 are configured as in the case of the optical modulation element 121. (a) of Fig. 3 is a plan view of the optical modulation element 121 in accordance with the present specific example. (b) of Fig. 3 is an enlarged perspective view of a part (i.e., a part surrounded by the broken lines in (a) of Fig. 3) of the optical modulation element 121 in accordance with the present specific example.

As shown in (a) of Fig. 3, the optical modulation element 121 is constituted by a plurality of microcells C having respective phase-modulation amounts that are set independently of each other. When signal light enters the optical modulation element 121, the signal light is phase-modulated by the microcells C, and signal light beams thus phase-modulated by the respective microcells C interfere with each other. Consequently, predetermined optical computing (conversion of a two-dimensional intensity distribution according to a predetermined conversion rule) is carried out. The phase-modulation amounts of the microcells C may be variable or may be fixed. In the present specific example, the phase-modulation amounts are fixed.

In the present specification, the "microcell" means a cell having a cell size of less than 10 µm, for example. Further, the "cell size" means a square root of an area of a cell. For example, given that the microcell C is in the form of a square in a plan view, a cell size of the microcell C means a length of one side of the microcell C. A lower limit of the cell size of the microcell C is 1 nm, for example.

The optical modulation element 121 shown in (a) of Fig. 3 as an example is constituted by 200 × 200 microcells C arranged in a matrix. A shape of each microcell C in a plan view is a square of 500 nm × 500 nm. A shape of the optical modulation element 121 in a plan view is a square of 100 µm × 100 µm.

A phase-modulation amount of each microcell C can be set independently for the cell by (1) setting a thickness of the microcell C independently for the cell or (2) selecting a refractive index of the microcell C independently for the cell. The present specific example employs the method (1), which can be carried out by nanoimprinting. In this case, as shown in (b) of Fig. 3, each microcell C is constituted by a pillar having a quadrangular prism shape having a square bottom surface with sides each having a length equal to a cell size. In this case, the phase-modulation amount of the signal light passing through each microcell C is determined in accordance with a height of a pillar constituting the microcell C. That is, a microcell C constituted by a pillar having a high height has a large phase-modulation amount, whereas a microcell C constituted by a pillar having a low height has a small phase-modulation amount.

### (Specific Example 2 of Optical Modulation Element)

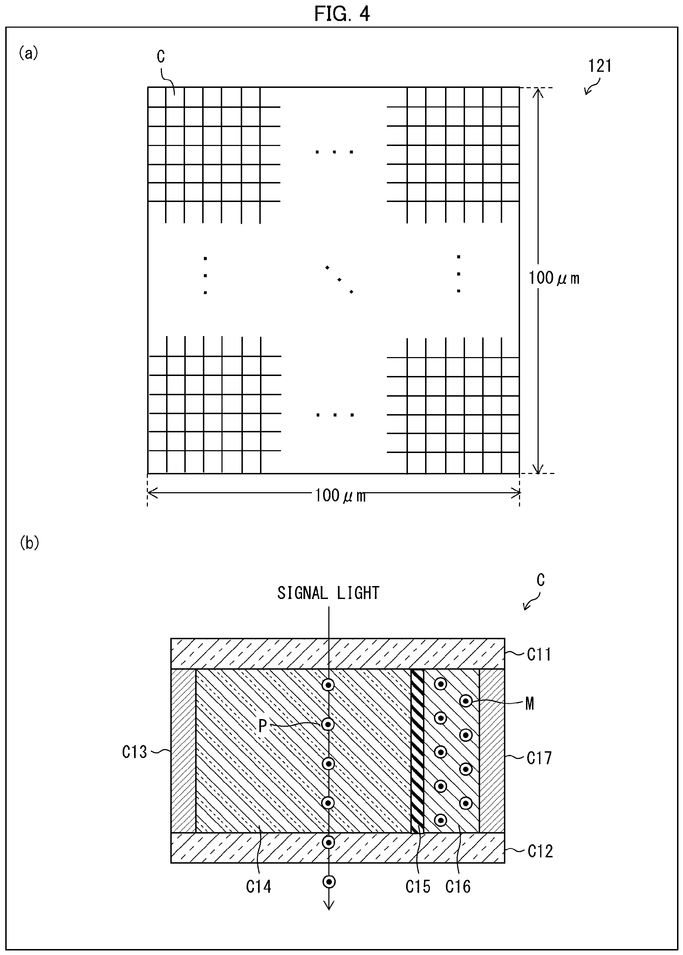

The following description will discuss, with reference to Fig 4, a second specific example of the optical modulation elements 121 to 124. Here, the optical modulation element 121 is taken as an example, but the optical modulation elements 122 to 124 are configured as in the case of the optical modulation element 121. (a) of Fig. 4 is a plan view of the optical modulation element 121 in accordance with the present specific example. (b) of Fig. 4 is a cross-sectional view of a cell C included in the optical modulation element 121 in accordance with the present specific example.

As shown in (a) of Fig. 4, the optical modulation element 121 is constituted by a plurality of microcells C having respective phase-modulation amounts that are set independently of each other. When signal light enters the optical modulation element 121, the signal light is phase-modulated by the microcells C, and signal light beams thus phase-modulated by the respective microcells C interfere with each other. Consequently, the predetermined optical computing is carried out. The phase-modulation amounts of the microcells C may be variable or may be fixed. In the present specific example, the phase-modulation amounts are variable.

The optical modulation element 121 shown in (a) of Fig. 4 as an example is constituted by 200 × 200 microcells C arranged in a matrix. A shape of each microcell C in a plan view is a square of 500 nm × 500 nm. A shape of the optical modulation element 121 in a plan view is a square of 100 µm × 100 µm.

For example, as shown in (b) of Fig. 4, each microcell C constituting the optical modulation element 121 may be constituted by a first polarizing plate C11, a second polarizing plate C12, a first electrode C13, a magnetization free layer C14, an insulating layer C15, a magnetization fixed layer C16, and a second electrode C17.

The first polarizing plate C11 and the second polarizing plate C12 are provided so as to face each other. The first electrode C13, the magnetization free layer C14, the insulating layer C15, the magnetization fixed layer C16, and the second electrode C17 are stacked in this order, and are sandwiched between the first polarizing plate C11 and the second polarizing plate C12. Here, a direction in which the first electrode C13, the magnetization free layer C14, the insulating layer C15, the magnetization fixed layer C16, and the second electrode C17 are stacked is orthogonal to a direction in which the first polarizing plate C11 and the second polarizing plate C12 are stacked. Thus, a first side surface of the magnetization free layer C14 is in surface contact with the first polarizing plate C11, and a second side surface of the magnetization free layer C14 which faces the first side surface is in surface contact with the second polarizing plate C12. The signal light L (1) enters an inside of the magnetization free layer C14 via the first polarizing plate C11, (2) propagates inside the magnetization free layer C14, and (3) is emitted through the second polarizing plate C12 to an outside of the magnetization free layer C14.

The magnetization free layer C14 is made of, for example, a soft magnetic material having electric conductivity and light transmissivity (for example, CoFeB). The magnetization fixed layer C16 is made of, for example, a hard magnetic material having electric conductivity (for example, permalloy). Selected as the first polarizing plate C11 and the second polarizing plate C12 is a polarizing plate that selectively allows, to pass therethrough, a polarized light component having a polarization direction P parallel to a magnetization direction M of the magnetization fixed layer C16. (b) of Fig. 4 takes as an example a case in which the magnetization direction M and the polarization direction P are parallel to both a main surface of the first polarizing plate C11 and a main surface of the magnetization fixed layer C16.

When a potential difference is provided between the first electrode C13 and the second electrode C17, a tunnel effect occurs and injects a spin current (a flow of spin-polarized electrons) from the magnetization fixed layer C16 through the insulating layer C15 into the magnetization free layer C14 to magnetize the magnetization free layer C14. Here, the magnetization occurring in the magnetization free layer C14 is magnetization parallel to the magnetization direction M of the magnetization fixed layer C16, that is, magnetization parallel to the polarization direction P of the signal light entering the magnetization free layer C14 through the first polarizing plate C11. This causes a phase of the signal light to be delayed by a transverse Kerr effect during a process of propagation in the magnetization free layer C14.

Here, a phase-shift amount of the signal light in the cell C is determined depending on a magnitude of the magnetization in the magnetization free layer C14. The magnitude of the magnetization in the magnetization free layer C14 is determined depending on a magnitude of the spin current injected into the magnetization free layer C14. The magnitude of the spin current injected into the magnetization free layer C14 is determined depending on the potential difference provided between the first electrode C13 and the second electrode C17. Thus, controlling the potential difference provided between the first electrode C13 and the second electrode C17 enables the phase-modulation amount of the cell C to be controlled (to be set to a desired value).

The present specific example describes a cell C having a configuration similar to that of a spin transfer torque (STT)-magnetoresistive random access memory (MRAM). However, this should not be construed as a limitation. For example, a cell C having a configuration similar to a spin orbit torque (SOT)-MRAM may be used. Note that such a cell C can be achieved by, for example, removing the insulating layer C15, the magnetization fixed layer C16, and the second electrode C17 from the structure shown in (b) of Fig. 4. In this case, for example, causing the first electrode C13 to contain heavy metal and providing a pulse voltage or a pulse current to the first electrode C13 enable the spin current to be efficiently injected into the magnetization free layer C14.

### (Variation 1 of optical transmission path)

With reference to Fig. 5, the following description will discuss a first variation of the optical transmission path 1 (hereinafter, referred to as an "optical transmission path 1A"). Fig. 5 is a perspective view illustrating a configuration of the optical transmission path 1A.

The optical transmission path 1A differs from the optical transmission path 1 in a direction in which signal light is expected to be transmitted. That is, in the optical transmission path 1, proceeding signal light entering the main surface 121b of the optical modulation element 121 expected, whereas in the optical transmission path 1A, receding signal light entering the end surface 11b of the optical waveguide 11 is expected.

Therefore, in the optical transmission path 1A, the phase-modulation amounts of the cells of the optical modulation elements 121 to 124 are set such that a difference between the intensity distribution of the signal light Li which enters the end surface 11b of the optical waveguide 11 and the intensity distribution of the signal light Lo which is emitted from the main surface 121b of the optical modulation element 121 becomes smaller than in a case where the optical modulation element group 12 is absent. This enables post-compensation for a change in the two-dimensional intensity distribution of the receding signal light which occurs in the optical waveguide 11.

### (Variation 2 of optical transmission path)

With reference to Fig. 6, the following description will discuss a second variation of the optical transmission path 1 (hereinafter, referred to as an "optical transmission path 1B"). Fig. 6 is a perspective view illustrating a configuration of the optical transmission path 1B.

The optical transmission path 1B differs from the optical transmission path 1 in a direction in which signal light is expected to be transmitted. That is, in the optical transmission path 1B, both the proceeding signal light entering the main surface 121b of the optical modulation element 121 and the receding signal light entering the end surface 11b of the optical waveguide 11 are expected.

Therefore, in the optical transmission path 1B, the phase-modulation amounts of the cells of the optical modulation elements 121 to 124 are set such that (1) a difference between the two-dimensional intensity distribution of signal light L1i which enters the main surface 121b of the optical modulation element 121 and the two-dimensional intensity distribution of signal light L1o which is emitted from the end surface 11b of the optical waveguide 11 becomes smaller than in a case where the optical modulation element group 12 is absent, and (2) a difference between the two-dimensional intensity distribution of signal light L2i which enters the end surface 11b of the optical waveguide 11 and the two-dimensional intensity distribution of the signal light L2o which is emitted from the main surface 121b of the optical modulation element 121 becomes smaller than in a case where the optical modulation element group 12 is absent. This enables both pre-compensation for a change in the two-dimensional intensity distribution of the proceeding signal light which occurs in the optical waveguide 11 and post-compensation for a change in the two-dimensional intensity distribution of the receding signal light which occurs in the optical waveguide 11.

Note that it is preferable that the proceeding signal light which enters the main surface 121b of the optical modulation element 121 and the receding signal light which enters the end surface 11b of the optical waveguide 11 have different polarization directions. This makes it easy to set the phase-modulation amounts of the cells of the optical modulation elements 121 to 124 so as to satisfy both the conditions (1) and (2) described above.

Further, it is preferable that the antireflection film AR is formed on the end surface 11a of the optical waveguide 11. This makes it possible to reduce a risk that signal light that has been emitted from the optical modulation element group 12 is reflected by the end surface 11a of the optical waveguide 11 and enters the optical modulation element group 12 again.

### (Variation 3 of optical waveguide)

With reference to Fig. 7, the following description will discuss a third variation of the optical transmission path 1 (hereinafter, referred to as an "optical transmission path 1C"). Fig. 7 is a perspective view illustrating a configuration of the optical transmission path 1C.

The optical transmission path 1C differs from the optical transmission path 1 in that an optical modulation element group 13 is added. As in the case of the optical modulation element group 12, the optical modulation element group 13 is a unit configured to compensate for a change in the two-dimensional intensity distribution of signal light which occurs during a process of guiding the signal light in the optical waveguide 11 and is constituted by at least one optical modulation element. In the present variation, as the optical modulation element group 13, an optical modulation element group constituted by four optical modulation elements 131 to 134 is used. As in the case of the optical modulation elements 121 to 124, the optical modulation elements 131 to 134 are each constituted by a plurality of cells having respective phase-modulation amounts that can be set independently of each other.

The phase-modulation amounts of the cells of the optical modulation elements 121 to 124 and the optical modulation elements 131 to 134 are set such that a difference between the two-dimensional intensity distribution of the signal light Li which enters the main surface 121b of the optical modulation element 121 and the two-dimensional intensity distribution of the signal light Li which is emitted from an end surface 131b of the optical modulation element 131 becomes smaller than in a case where the optical modulation element group 12 and the optical modulation element group 13 are absent. This enables pre- and post-compensation for a change in the two-dimensional intensity distribution of the proceeding signal light which occurs in the optical waveguide 11.

In this case, it is preferable that the antireflection film AR is formed on the end surface 11a of the optical waveguide 11. This makes it possible to reduce a risk that signal light that has been emitted from the optical modulation element group 12 is reflected by the end surface 11a of the optical waveguide 11 and enters the optical modulation element group 12 again.

Note that the phase-modulation amounts of the cells of the optical modulation elements 121 to 124 and the optical modulation elements 131 to 134 may be set such that (1) a difference between the two-dimensional intensity distribution of the signal light Li which enters the main surface 121b of the optical modulation element 121 and the two-dimensional intensity distribution of the signal light Li which is emitted from the end surface 131b of the optical modulation element 131 becomes smaller than in a case where the optical modulation element group 12 and the optical modulation element group 13 are absent, and (2) a difference between the two-dimensional intensity distribution of signal light (not shown) which enters the end surface 131b of the optical modulation element 131 and the two-dimensional intensity distribution of signal light (not shown) which is emitted from the main surface 121b of the optical modulation element 121 becomes smaller than in a case where the optical modulation element group 12 and the optical modulation element group 13 are absent. This enables pre- and post-compensation for a change in the two-dimensional intensity distribution of the proceeding signal light which occurs in the optical waveguide 11 and pre- and post-compensation for a change in the two-dimensional intensity distribution of the receding signal light which occurs in the optical waveguide 11.

In this case, it is preferable that also on the end surface 11b of the optical waveguide 11, an antireflection film (not shown) is formed. This makes it possible to reduce a risk that signal light that has been emitted from the optical modulation element group 13 is reflected by the end surface 11b of the optical waveguide 11 and enters the optical modulation element group 13 again.

Note that although in the present variation, both the optical modulation element group 12 and the optical modulation element group 13 are used for the compensation described above, this should not be construed as a limitation. For example, it is possible that the optical modulation element group 12 is used for the compensation described above and the optical modulation element group 13 is used for another optical computing. In this case, an optical waveguide having an optical computing function is achieved.

### (Mounting example of optical transmission path)

With reference to Fig. 8, the following description will discuss an example in which the optical transmission path 1 is mounted. Fig. 8 is a cross-sectional view illustrating a first mounting example of the optical transmission path 1.

In the present mounting example, an end part of the optical waveguide 11 (optical fiber) is inserted into a ferrule F having a cylindrical shape. The ferrule F is made of, for example, zirconia. Among the end parts of the ferrule F, an end part on an end surface 11a side of the optical waveguide 11 may be processed to have a tapered shape as illustrated in Fig. 8. Further, among the end parts of the ferrule F, the end part opposite to the end surface 11a side of the optical waveguide 11 may be provided with a flange part G.

In the present mounting example, the optical modulation element group 12 is stored in an optical connector C. The optical connector C is provided with a recess C1 for storing an end part of the optical waveguide 11 together with the ferrule F and a recess C2 for storing a protrusion P1 of an optical processor P. The optical modulation element group 12 is provided in a space between the recess C1 and the recess C2.

The present mounting example enables the optical processor P and the optical waveguide 11 to be easily connected with each other via the optical connector C.

In a case where the phase-modulation amounts of the cells of the optical modulation elements 121 to 124 are variable, it is possible to employ a configuration in which the phase-modulation amounts of the cells of the optical modulation elements 121 to 124 are set in accordance with the optical waveguide 11 to be connected. No matter what optical fiber the optical waveguide 11 is, this configuration makes it possible to appropriately compensate for a change in the two-dimensional intensity distribution of signal light which occurs in the optical fiber. For example, if a phase-modulation amount for an optical fiber having a length of one meter, a phase-modulation amount for an optical fiber having a length of two meters, ... are prepared in advance, no matter how long optical fiber the optical waveguide 11 is, it is possible to appropriately compensate for a change in the two-dimensional intensity distribution of signal light which occurs in the optical fiber. In this case, the optical connector C may include a control part (not shown) configured to set the phase-modulation amounts of the cells of the optical modulation elements 121 to 124.

Further, as shown in Fig. 9, a microlens array L may be added so as to follow the optical modulation element group 12. This makes it possible to more reliably guide, to the cores of the optical waveguide 11, signal light which has passed through the optical modulation element group 12.

Aspects of the present invention can also be expressed as follows:
In an optical transmission path in accordance with Aspect 1 of the present invention, a configuration is employed of including: an optical waveguide; and an optical modulation element that has a plurality of cells having respective phase-modulation amounts set independently of each other and that has one main surface provided so as to face one end surface of the optical waveguide, wherein the respective phase-modulation amounts of the plurality of cells which constitute the optical modulation element are set so as to compensate for a change in two-dimensional intensity distribution of signal light, the change occurring in the optical waveguide.

According to the above configuration, it is possible to achieve an optical transmission path that enables compensating for a change in two-dimensional intensity distribution of signal light which occurs in an optical waveguide.

In an optical transmission path in accordance with Aspect 2 of the present invention, in addition to the configuration of Aspect 1, a configuration is employed in which the respective phase-modulation amounts of the plurality of cells which constitute the optical modulation element are set such that a difference between a two-dimensional intensity distribution of signal light which enters the other main surface of the optical modulation element and a two-dimensional intensity distribution of signal light which is emitted from the other end surface of the optical waveguide becomes smaller than in a case where the optical modulation element is absent.

According to the above configuration, it is possible to achieve an optical transmission path that, with respect to signal light which enters the other main surface of the optical modulation element, enables compensating for a change in two-dimensional intensity distribution which occurs in an optical waveguide.

In an optical transmission path in accordance with Aspect 3 of the present invention, in addition to the configuration of Aspect 1 or 2, a configuration is employed in which an antireflection film is formed on the one end surface of the optical waveguide.

According to the above configuration, it is possible to reduce a risk that signal light that has been emitted from the optical modulation element is reflected by the end surface of the optical waveguide and enters the optical modulation element again.

In an optical transmission path in accordance with Aspect 4 of the present invention, in addition to the configuration of any one of Aspects 1 to 3, a configuration is employed in which the respective phase-modulation amounts of the plurality of cells which constitute the optical modulation element are set such that a difference between a two-dimensional intensity distribution of signal light which enters the other end surface of the optical waveguide and a two-dimensional intensity distribution of signal light which is emitted from the other main surface of the optical modulation element becomes smaller than in a case where the optical modulation element is absent.

According to the above configuration, it is possible to achieve an optical transmission path that, with respect to signal light which enters the other end surface of the optical waveguide, enables compensating for a change in two-dimensional intensity distribution which occurs in the optical waveguide.

In an optical transmission path in accordance with Aspect 5 of the present invention, in addition to the configuration of Aspect 1, a configuration is employed of further including another optical modulation element that has a plurality of cells having respective phase-modulation amounts which are able to be set independently of each other and that has one main surface provided so as to face the other end surface of the optical waveguide.

According to the above configuration, it is possible to achieve an optical transmission path in which both the optical modulation element and the another optical modulation element are used for compensating for a change in the two-dimensional intensity distribution of signal light which occurs in the optical waveguide, to enable the compensation to be performed more accurately. In addition, it is also possible to achieve an optical transmission path in which the optical modulation element is used for compensating for a change in the two-dimensional intensity distribution of signal light which occurs in the optical waveguide and the another optical modulation element is used for certain optical computing, to enable the optical computing to be performed in addition to the compensation.

In an optical transmission path in accordance with Aspect 6 of the present invention, in addition to the configuration in accordance with Aspect 5, a configuration is employed in which the respective phase-modulation amounts of the plurality of cells which constitute the optical modulation element and the respective phase-modulation amounts of the plurality of cells which constitute the another optical modulation element are set such that a difference between a two-dimensional intensity distribution of signal light which enters the other main surface of the optical modulation element and a two-dimensional intensity distribution of signal light which is emitted from the other main surface of the another optical modulation element becomes smaller than in a case where the optical modulation element and the another optical modulation element are absent.

According to the above configuration, it is possible to achieve an optical transmission path that, with respect to signal light which enters the other main surface of the optical modulation element, enables more accurately compensating for a change in two-dimensional intensity distribution which occurs in an optical waveguide.

In an optical transmission path in accordance with Aspect 7 of the present invention, in addition to the configuration of any one of Aspects 1 to 6, a configuration is employed in which the optical waveguide guides the signal light with use of a single core.

According to the above configuration, it is possible to achieve an optical transmission path that enables compensating for a change in the two-dimensional intensity distribution of signal light which occurs through the total reflection on a core-clad interface in the optical waveguide.

In an optical transmission path in accordance with Aspect 8 of the present invention, in addition to the configuration of any one of Aspects 1 to 6, a configuration is employed in which the optical waveguide guides the signal light with use of a plurality of cores.

According to the above configuration, it is possible to achieve an optical transmission path that enables compensating for a change in the two-dimensional intensity distribution of signal light which occurs through crosstalk between adjacent cores in the optical waveguide.

In an optical transmission path in accordance with Aspect 9 of the present invention, a configuration is employed of including: an optical waveguide; an optical modulation element that has a plurality of cells having respective phase-modulation amounts which are able to be set independently of each other and that has one main surface provided so as to face one end surface of the optical waveguide; and a control part configured to set the respective phase-modulation amounts of the plurality of cells which constitute the optical modulation element so as to compensate for a change in two-dimensional intensity distribution of signal light, the change occurring in the optical waveguide.

According to the above configuration, it is possible to achieve an optical transmission path that enables compensating for a change in two-dimensional intensity distribution of signal light which occurs in an optical waveguide.

An optical connector in accordance with Aspect 10 of the present invention is an optical connector for connecting an optical waveguide and an optical processor, and in the optical connector, a configuration is employed of including: an optical modulation element that has a plurality of cells having respective phase-modulation amounts set independently of each other and that has one main surface provided so as to face one end surface of the optical waveguide, wherein the respective phase-modulation amounts of the plurality of cells which constitute the optical modulation element are set so as to compensate for a change in two-dimensional intensity distribution of signal light, the change occurring in the optical waveguide.

Connecting the optical waveguide and the optical processor via the optical connector enables compensating for a change in the two-dimensional intensity distribution of signal light which occurs in the optical waveguide.

An optical connector in accordance with Aspect 11 of the present invention is an optical connector for connecting an optical waveguide and an optical processor, and in the optical connector, a configuration is employed of including an optical modulation element that has a plurality of cells having respective phase-modulation amounts which are able to be set independently of each other and that has one main surface provided so as to face one end surface of the optical waveguide; and a control part configured to set the respective phase-modulation amounts of the plurality of cells which constitute the optical modulation element so as to compensate for a change in two-dimensional intensity distribution of signal light, the change occurring in the optical waveguide.

Connecting the optical waveguide and the optical processor via the optical connector enables compensating for a change in the two-dimensional intensity distribution of signal light which occurs in the optical waveguide.

### [Additional Remarks]

The present invention is not limited to the description of the embodiments, but can be altered in many ways by a person skilled in the art within the scope of the claims. An embodiment derived from a proper combination of technical means disclosed in different embodiments is also encompassed in the technical scope of the present invention.

### Reference Signs List

- 1: Optical transmission path
- 11: Optical waveguide
- 12: Optical modulation element group
- 121 to 124: Optical modulation element
- 13: Optical modulation element group
- 131 to 134: Optical modulation element
- P: Optical processor
- C: Optical connector

## Claims

1. An optical transmission path comprising:
an optical waveguide; and
an optical modulation element that has a plurality of cells having respective phase-modulation amounts set independently of each other and that has one main surface provided so as to face one end surface of the optical waveguide, wherein
the respective phase-modulation amounts of the plurality of cells which constitute the optical modulation element are set so as to compensate for a change in two-dimensional intensity distribution of signal light, the change occurring in the optical waveguide.

2. The optical transmission path according to claim 1, wherein the respective phase-modulation amounts of the plurality of cells which constitute the optical modulation element are set such that a difference between a two-dimensional intensity distribution of signal light which enters the other main surface of the optical modulation element and a two-dimensional intensity distribution of signal light which is emitted from the other end surface of the optical waveguide becomes smaller than in a case where the optical modulation element is absent.

3. The optical transmission path according to claim 1 or 2, wherein an antireflection film is formed on the one end surface of the optical waveguide.

4. The optical transmission path according to any one of claims 1 to 3, wherein the respective phase-modulation amounts of the plurality of cells which constitute the optical modulation element are set such that a difference between a two-dimensional intensity distribution of signal light which enters the other end surface of the optical waveguide and a two-dimensional intensity distribution of signal light which is emitted from the other main surface of the optical modulation element becomes smaller than in a case where the optical modulation element is absent.

5. The optical transmission path according to claim 1, further comprising another optical modulation element that has a plurality of cells having respective phase-modulation amounts which are able to be set independently of each other and that has one main surface provided so as to face the other end surface of the optical waveguide.

6. The optical transmission path according to claim 5, wherein the respective phase-modulation amounts of the plurality of cells which constitute the optical modulation element and the respective phase-modulation amounts of the plurality of cells which constitute the another optical modulation element are set such that a difference between a two-dimensional intensity distribution of signal light which enters the other main surface of the optical modulation element and a two-dimensional intensity distribution of signal light which is emitted from the other main surface of the another optical modulation element becomes smaller than in a case where the optical modulation element and the another optical modulation element are absent.

7. The optical transmission path according to any one of claims 1 to 6, wherein the optical waveguide guides the signal light with use of a single core.

8. The optical transmission path according to any one of claims 1 to 6, wherein the optical waveguide guides the signal light with use of a plurality of cores.

9. An optical transmission path comprising:
an optical waveguide;
an optical modulation element that has a plurality of cells having respective phase-modulation amounts which are able to be set independently of each other and that has one main surface provided so as to face one end surface of the optical waveguide; and
a control part configured to set the respective phase-modulation amounts of the plurality of cells which constitute the optical modulation element so as to compensate for a change in two-dimensional intensity distribution of signal light, the change occurring in the optical waveguide.

10. An optical connector for connecting an optical waveguide and an optical processor, the optical connector comprising:
an optical modulation element that has a plurality of cells having respective phase-modulation amounts set independently of each other and that has one main surface provided so as to face one end surface of the optical waveguide, wherein
the respective phase-modulation amounts of the plurality of cells which constitute the optical modulation element are set so as to compensate for a change in two-dimensional intensity distribution of signal light, the change occurring in the optical waveguide.

11. An optical connector for connecting an optical waveguide and an optical processor, the optical connector comprising:
an optical modulation element that has a plurality of cells having respective phase-modulation amounts which are able to be set independently of each other and that has one main surface provided so as to face one end surface of the optical waveguide; and
a control part configured to set the respective phase-modulation amounts of the plurality of cells which constitute the optical modulation element so as to compensate for a change in two-dimensional intensity distribution of signal light, the change occurring in the optical waveguide.
